(19) **Europäisches Patentamt**

**European Patent Office**

**Office européen des brevets**

(11) **EP 1 363 474 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(51) Int Cl.:
*H05B 6/04* *(2006.01)*     *H05B 6/06* *(2006.01)*

(21) Anmeldenummer: **03008680.5**

(22) Anmeldetag: **16.04.2003**

(54) **Einrichtung zum induktiven Erwärmen von Werkstücken**

Inductive heating device of workpieces

Dispositif de chauffage inductif de pièces

(84) Benannte Vertragsstaaten:
**AT BE BG CH CY CZ DE DK EE ES FI FR GB GR HU IE IT LI LU MC NL PT RO SE SI SK TR**

(30) Priorität: **16.05.2002 DE 10223152**

(43) Veröffentlichungstag der Anmeldung:
**19.11.2003 Patentblatt 2003/47**

(73) Patentinhaber: **ELDEC Schwenk Induction GmbH**
**72280 Dornstetten (DE)**

(72) Erfinder:
 • **Schwenk, Wolfgang**
  **72250 Freudenstadt (DE)**

 • **Häussler, Andreas**
  **72250 Freudenstadt-Frutenhof (DE)**
 • **Heiliger, Andreas**
  **2391 Kaltenleutgeben (AT)**

(74) Vertreter: **Hoeger, Stellrecht & Partner**
**Patentanwälte**
**Uhlandstrasse 14 c**
**70182 Stuttgart (DE)**

(56) Entgegenhaltungen:
**DE-A- 4 011 612**     **US-A- 1 852 215**
**US-A- 4 755 648**

**Beschreibung**

Die Erfindung betrifft eine Einrichtung zum induktiven Erwärmen von Werkstücken mittels einer Induktionsspule, insbesondere zum Härten der Werkstücke, umfassend einen durch einen ersten Gleichrichter gespeisten ersten Wechselrichter und einen von diesem Wechselrichter betriebenen ersten Schwingkreis, der für eine erste Frequenz als Resonanzfrequenz ausgebildet ist, einen durch einen zweiten Gleichrichter über einen Spannungszwischenkreis gespeisten zweiten Wechselrichter und einen von diesem Wechselrichter betriebenen zweiten Schwingkreis, der für eine zweite Frequenz als Resonanzfrequenz ausgebildet ist, wobei die zweite Frequenz höher liegt als die erste Frequenz, mindestens einen zwischen einem der Wechselrichter und dem diesem zugeordneten Schwingkreis vorgesehenen Transformator und einen die Induktionsspule umfassenden induktiven Lastzweig mit Lastanschlüssen, welcher über die Lastanschlüsse sowohl in den ersten Schwingkreis als auch in den zweiten Schwingkreis eingebunden und sowohl im ersten Schwingkreis als auch im zweiten Schwingkreis als Induktivität miteinbezogen ist.

Eine derartige Einrichtung zum induktiven Erwärmen von Werkstücken ist aus der DE 40 11 612 A1, Fig. 4, bekannt.

Bei derartigen, mit zwei Frequenzen arbeitenden Einrichtungen besteht das Problem, sicherzustellen, daß die Wechselrichter nicht durch die jeweils andere Frequenz in ihrer Funktion gestört werden und außerdem die Wechselrichter möglichst vorteilhaft aufzubauen.

Diese Aufgabe wird bei einer Einrichtung der eingangs beschriebenen Art erfindungsgemäß dadurch gelöst, daß der erste Wechselrichter über einen Spannungszwischenkreis gespeist ist, daß der erste Schwingkreis als L-LC-Schwingkreis ausgebildet ist, daß der L-LC-Schwingkreis für über die Lastanschlüsse eingekoppelte Wechselspannung der zweiten Frequenz einen Dämpfungszweig und einen auf diesen Dämpfungszweig folgenden Quasikurzschlußzweig aufweist, daß der L-LC-Schwingkreis zur Kopplung des Quasikurzschlußzweigs mit dem ersten Wechselrichter eine Kopplungsinduktivität aufweist und daß der Dämpfungszweig der Quasikurzschlußzweig und die Kopplungsinduktivität Rückwirkungen von Wechselspannungen der zweiten Frequenz auf den ersten Wechselrichter dämpfen.

Der Vorteil dieser Lösung ist darin zu sehen, daß durch eine derartige Ausbildung des ersten Wechselrichters dieser aufgrund seiner Spannungssteuerung einfach ausgeführt werden kann und darüber hinaus noch die Möglichkeit besteht, Störungen des ersten Wechselrichters durch die zweite Frequenz aufgrund des vorgesehenen L-LC-Schwingkreises mit Dämpfungszweig und Quasikurzschlußzweig zu verhindern.

Die Erfindung sieht vor, daß der erste Schwingkreis als L-LC-Schwingkreis ausgebildet ist und einen parallel zum Lastkreis geschalteten und mit diesem über die Lastanschlüsse verbundenen Kopplungszweig umfaßt, in welchem die Kopplungsinduktivität angeordnet ist und welche Rückwirkungen von Wechselspannungen der zweiten Frequenz auf den ersten Wechselrichter dämpft.

Ein derartiger Kopplungszweig mit Dämpfungszweig hat den großen Vorteil, daß sich dieser vorteilhaft zur Entkopplung des ersten Wechselrichters gegenüber Wechselspannungen mit der zweiten Frequenz realisieren läßt.

Dadurch daß der Kopplungszweig einen Quasikurzschlußzweig für Wechselspannungen der zweiten Frequenz aufweist, ergibt sich für derartige Spannungen ein niederohmiger Kurzschluß.

Um die auf den Quasikurzschlußzweig wirkenden Wechselspannungen der zweiten Frequenz bereits vor ihrer Einwirkung auf den Quasikurzschlußzweig zu dämpfen, ist vorzugsweise vorgesehen, daß der Quasikurzschlußzweig über eine Drosselinduktivität für Wechselspannungen der zweiten Frequenz an die Lastanschlüsse gekoppelt ist, so daß durch die Drosselinduktivität noch eine bessere Dämpfung der Rückwirkung von Wechselspannungen der zweiten Frequenz auf den ersten Wechselrichter realisierbar ist.

Ferner läßt sich der Kopplungszweig vorteilhafterweise so ausbilden, daß der Quasikurzschlußzweig über die Kopplungsinduktivität mit dem ersten Wechselrichter gekoppelt ist, so daß der Quasikurzschlußzweig in optimaler Weise wirksam werden kann.

Hinsichtlich der Ausbildung des Kurzschlußzweiges sind die unterschiedlichsten Lösungen denkbar.

So sieht eine besonders vorteilhafte Lösung vor, daß der Quasikurzschlußzweig eine Kapazität umfaßt.

Die Kapazität ist dabei einerseits so auszulegen, daß sie die Spannungen der zweiten Frequenz kurzschließt.

Andererseits ist in dem ersten Schwingkreis auch noch eine Schwingkreiskapazität erforderlich.

Die Schwingkreiskapazität ist dabei vorzugsweise so ausgebildet, daß sie die Kapazität des Kurzschlußzweiges mitumfaßt.

Eine besonders günstige Lösung sieht vor, daß die Schwingkreiskapazität ebenfalls in dem Kopplungszweig angeordnet ist.

Im einfachsten Fall ist dabei die Schwingkreiskapazität identisch mit der Kapazität des Kurzschlußzweiges.

Hinsichtlich des Betriebs des ersten Schwingkreises wurden bislang keine näheren Angaben gemacht. Prinzipiell wäre es denkbar, den ersten Schwingkreis in einem Bereich um die Resonanzfrequenz zu betreiben.

Eine hinsichtlich der Leistungssteuerung des ersten Wechselrichters besonders günstige Lösung sieht vor, daß der erste Schwingkreis von dem ersten Wechselrichter unmittelbar bei der ersten Frequenz, das heißt bei seiner Resonanzfrequenz, betrieben wird. Dies hat große Vorteile im Hinblick auf eine Leistungssteuerung des Wechselrichters, da dann Kommutierungsverluste reduziert werden können.

Hinsichtlich der generellen Ausbildung des ersten Schwingkreises hat es sich als vorteilhaft erwiesen, wenn dieser zusätzlich zur Kopplungsinduktivität einen parallelen Schwingkreis umfaßt.

Mit einem derartigen parallelen Schwingkreis läßt sich in vorteilhafter Weise Wechselspannung der zweiten Frequenz unterdrücken.

Vorzugsweise ist dabei vorgesehen, daß der Parallelschwingkreis eine Resonanzfrequenz aufweist, die von der Resonanzfrequenz des ersten Schwingkreises abweicht, vorzugsweise weicht die Resonanzfrequenz der Parallelschwingkreises nur geringfügig von der Resonanzfrequenz des ersten Schwingkreises ab, so daß durch den Parallelschwingkreis bedingte Verluste vernachlässigbar sind.

Vorzugsweise umfaßt dabei der Parallelschwingkreis mindestens einen Kondensator und als Induktivität mindestens die vom induktiven Lastzweig gebildete Induktivität, wobei der Kondensator parallel zum induktiven Lastzweig geschaltet ist.

Es ist aber auch denkbar, in dem Parallelschwingkreis mehrere Kondensatoren und mehrere Induktivitäten vorzusehen.

Eine besonders günstige Ausführungsform einer erfindungsgemäßen Einrichtung sieht vor, daß in dem ersten Schwingkreis zwischen einem der Lastanschlüsse und dem zum Lastzweig parallelen Kondensator eine Drosselinduktivität angeordnet ist.

Eine derartige, in dem Parallelschwingkreis vorgesehene Drosselinduktivität schafft ferner die Möglichkeit zu verhindern, daß Wechselstrom mit der zweiten Frequenz auf den ersten Wechselrichter wirkt.

Ein besonders vorteilhaftes Ausführungsbeispiel eines erfindungsgemäß ausgebildeten ersten Schwingkreises sieht vor, daß der erste Schwingkreis eine Kopplungskapazität aufweist, mit welcher die Energieübertragung optimierbar ist.

Vorzugsweise sind dabei die Kopplungskapazität und die Kopplungsinduktivität in Serie geschaltet.

Besonders zweckmäßig für die Ankopplung des ersten Wechselrichters ist es, wenn die Kopplungsinduktivität und Kopplungskapazität in dem Kopplungszweig zwischen dem Quasikurzschlußzweig und dem ersten Wechselrichter liegen.

Hinsichtlich der Ausbildung des zweiten Schwingkreises wurden bislang ebenfalls keine näheren Angaben gemacht. So wäre es beispielsweise auch denkbar, den zweiten Schwingkreis als Parallelschwingkreis auszubilden.

Als besonders vorteilhaft hat es sich jedoch erwiesen, wenn der zweite Schwingkreis ein Serienschwingkreis ist, da mit diesem in einfacher Weise eine Rückwirkung eines Wechselstroms mit der ersten Frequenz auf den zweiten Wechselrichter unterdrückt werden kann.

Hinsichtlich der Steuerung der Wechselrichter sind die unterschiedlichsten Lösungen denkbar.

Eine besonders vorteilhafte Form sieht vor, daß dem ersten Wechselrichter eine erste Wechselrichtersteuerung als Leistungssteuerung zugeordnet ist.

Eine derartige Leistungssteuerung kann in unterschiedlichster Art und Weise erfolgen.

Im Falle der ersten Frequenz ist es besonders günstig, wenn die erste Wechselrichtersteuerung die Leistung des ersten Wechselrichters durch Pulsweitenmodulation steuert.

Der Einsatz der Pulsweitenmodulation zur Leistungssteuerung des ersten Wechselrichters ist besonders sinnvoll bei Frequenzen bis 50, maximal 100 kHz.

Bei höheren Frequenzen sieht eine vorteilhafte Lösung vor, daß anstelle der Pulsweitenmodulation zur Leistungssteuerung Pulspaketsteuerung eingesetzt wird.

Das Verfahren der Pulsweitenmodulation bietet den Vorteil, daß sich in einfacher Weise eine Leistungssteuerung realisieren läßt, wobei vorzugsweise ein Schalten der Spannung, insbesondere ein Einschalten der Spannung bei Nulldurchgängen des Stroms, erfolgt.

Hinsichtlich der Steuerung des zweiten Wechselrichters sind ebenfalls die unterschiedlichsten Möglichkeiten denkbar.

Besonders günstig ist es, wenn dem zweiten Wechselrichter eine zweite Wechselrichtersteuerung als Leistungssteuerung zugeordnet ist, um auch die Leistung des zweiten Wechselrichters in geeigneter Weise steuern zu können.

Grundsätzlich wäre es auch bei der zweiten Wechselrichtersteuerung denkbar, zur Leistungssteuerung Pulsweitemodulationen einzusetzen, insbesondere bei Frequenzen kleiner 100 kHz.

Bei Frequenzen über 100 kHz ist zweckmäßigerweise vorgesehen, daß die zweite Wechselrichtersteuerung bei der zweiten Frequenz die Leistung des zweiten Wechselrichters durch Pulspaketsteuerung steuert.

Eine Pulspaketsteuerung umfaßt dabei eine Steuerung des Wechselrichters dergestalt, daß dieser die Spannung mindestens an einer gesamten Halbwelle des in dem zweiten Schwingkreis fließenden Wechselstroms einschaltet und dadurch ein Pulspaket bildet und nach diesem Pulspaket entsprechend dem Modulationsgrad eine Pulspause bis zum nächsten Pulspaket vorsieht. Das Pulspaket kann aber auch mehrere Halbwellen umfassen, üblicherweise eine Periode, und je nach Modulationsgrad kann dann nach jedem Pulspaket die vorgesehene Pulspause länger oder kürzer gewählt werden.

Eine besonders günstige Ausführungsform einer erfindungsgemäßen Einrichtung sieht vor, daß die Einrichtung eine Gesamtsteuerung aufweist, welche mit der ersten und zweiten Wechselrichtersteuerung gekoppelt ist und mit welcher die Leistung des ersten Wechselrichters und die Leistung des zweiten Wechselrichters unterschiedlich einstellbar sind. Vorzugsweise sind die Leistungen dabei relativ zueinander in unterschiedlichem Verhältnis einstellbar sind.

Mit einer derartigen Gesamtsteuerung besteht die Möglichkeit, die Leistung des Wechselstroms mit den unterschiedlichen Frequenzen individuell an das jeweilige Werkstück anzupassen und somit eine optimale Erwärmung des Werkstücks zu erhalten, insbesondere in Anpassung an die Oberflächenform desselben.

Zweckmäßigerweise ist dabei vorgesehen, daß mit der Gesamtsteuerung die Leistung des ersten Wechselrichters und die Leistung des zweiten Wechselrichters jeweils im wesentlichen stufenlos einstellbar sind.

Vorzugsweise ist dabei vorgesehen, daß die Leistung des ersten Wechselrichters relativ zur Leistung des zweiten Wechselrichters mindestens in einem Bereich der von einem Verhältnis von 60:40 bis zu einem Verhältnis von 40:60 reicht, einstellbar sind, noch besser ist es, wenn der Bereich von einem Verhältnis von 30:70 bis zu einem Verhältnis von 70:30 und bevorzugt ist mindestens ein Bereich von einem Verhältnis von 10:90 bis zu einem Verhältnis von 90:10.

Hinsichtlich des Unterschieds zwischen der ersten und der zweiten Frequenz wurden bislang im Zusammenhang mit der vorliegenden Erfindung keine näheren Angaben gemacht. So wurde lediglich festgelegt, daß die zweite Frequenz größer als die erste Frequenz sein soll.

Als besonders günstig hat es sich erwiesen, wenn die erste Frequenz und die zweite Frequenz sich um mindestens eine halbe Dekade unterscheiden, um in den jeweiligen Schwingkreisen die Rückwirkung der jeweils anderen Frequenz auf den dem Schwingkreis zugeordneten Wechselrichter möglichst gut unterdrücken zu können um unterschiedliche Wirkungen auf das Werkstück zu erzielen.

Hinsichtlich der Frequenzen der einzelnen Schwingkreise wurden ebenfalls im Zusammenhang mit der bisherigen Erläuterung der Erfindung keine näheren Angaben gemacht. So sieht ein vorteilhaftes Ausführungsbeispiel vor, daß die erste Frequenz im Bereich von 1 kHz bis 500 kHz liegt.

Hinsichtlich der zweiten Frequenz wurden bislang ebenfalls keine näheren Angaben gemacht. So sieht eine vorteilhafte Lösung vor, daß die zweite Frequenz in einem Bereich von 5 kHz bis 3 MHz liegt.

Prinzipiell sind die Induktivitäten und Kapazitäten in den einzelnen Schwingkreisen entsprechend der vorgesehenen ersten Frequenz bzw. zweiten Frequenz zu dimensionieren.

Lediglich in den Fällen, in denen noch zusätzliche Drosseln vorgesehen sind, gibt es weitere Freiheitsgrade hinsichtlich der Dimensionierung der Komponenten.

So sieht eine besonders vorteilhafte Lösung vor, daß die Drosselinduktivität in dem ersten Schwingkreis einen Induktivitätswert aufweist, der mindestens ungefähr das Dreifache der Summe der Induktivitätswerte der übrigen Induktivitäten im ersten Schwingkreis beträgt.

Ferner ist im Fall einer Drosselinduktivität ein Kopplungszweig, die zwischen dem Quasikurzschlußzweig und dem Lastanschluß liegt, vorgesehen, daß diese einen Induktivitätswert aufweist, der mindestens dem Dreifachen des Induktivitätswertes des Lastkreises entspricht.

Hinsichtlich der Ausführung des Lastkreises wurden bislang keine näheren Angaben gemacht.

Im einfachsten Fall ist der Lastkreis so auszuführen, daß er lediglich die Induktionsspule umfaßt.

Um in vorteilhafter Weise eine Anpassung vornehmen zu können, ist vorzugsweise vorgesehen, daß im Lastkreis zwischen den Lastanschlüssen und der Induktionsspule ein Transformator vorgesehen ist.

Im Zusammenhang mit den bislang beschriebenen Ausführungsbeispielen wurde nicht näher darauf eingegangen, ob zwischen den Wechselrichtern und den jeweiligen Schwingkreisen ein Transformator vorzusehen ist.

Vorzugsweise ist mindestens zwischen einem der Wechselrichter und dem diesem zugeordneten Schwingkreis ein Transformator vorzusehen, um die beiden über den Lastkreis bezüglich Gleichspannungspotentialen gekoppelten Wechselrichter von derartigen Gleichspannungspotentialen zu entkoppeln.

Besonders vorteilhaft ist es, wenn zwischen dem ersten Wechselrichter und dem ersten Schwingkreis ein Anpasstransformator vorgesehen ist, der jeweils noch eine Anpassung an den jeweiligen Schwingkreis ermöglicht.

Ferner ist es ebenfalls vorteilhaft, wenn auch zwischen dem zweiten Wechselrichter und dem zweiten Schwingkreis ein Anpasstransformator vorgesehen ist.

Weitere Merkmale und Vorteile der erfindungsgemäßen Lösung sind Gegenstand der nachfolgenden Beschreibung sowie der zeichnerischen Darstellung einiger Ausführungsbeispiele. In der Zeichnung zeigen:

Fig. 1      eine schematische Darstellung eines ersten Ausführungsbeispiels einer erfindungsgemäßen Einrichtung;

Fig. 2      eine vergrößerte perspektivische Darstellung einer Induktionsspule des in Fig. 1 dargestellten Ausführungsbeispiels und der Wechselspannung, die an dieser Induktionsspule anliegt;

Fig. 3      eine schematische vergrößerte Darstellung eines ersten Gleichrichters, eines ersten Wechselrichters mit dem ersten Schwingkreis;

Fig. 4      eine schematische Darstellung des Verlaufs der von dem ersten Wechselrichter erzeugten Spannung und des entsprechenden Stroms;

Fig. 5    eine schematische Darstellung des zweiten Gleichrichters, des zweiten Wechselrichters und des zweiten Schwingkreises;

Fig. 6    eine Darstellung des zeitlichen Verlaufs der vom zweiten Wechselrichter erzeugten Spannung und des vom zweiten Wechselrichter erzeugten Stroms bei 100 %-iger Modulation;

Fig. 7    eine schematische Darstellung des Verlaufs der Spannung und des Stroms ähnlich Fig. 6 bei einer 50 %-igen Modulation;

Fig. 8    eine schematische Darstellung des Verlaufs der Spannung und des Stroms ähnlich Fig. 6 bei einer Modulation von 20 % und

Fig. 9.   eine schematische Darstellung eines zweiten Ausführungsbeispiels einer erfindungsgemäßen Einrichtung ähnlich Fig. 1.

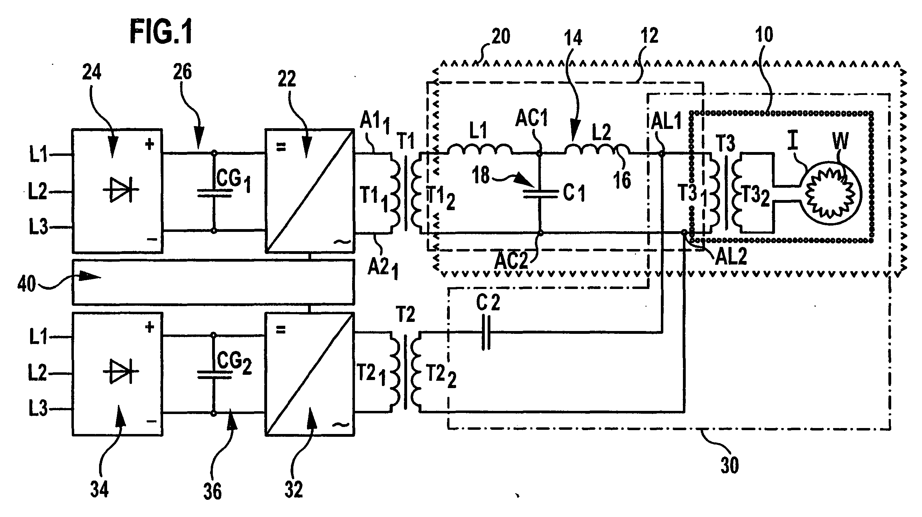

Ein erstes Ausführungsbeispiel einer erfindungsgemäßen Einrichtung zum induktiven Erwärmen eines Werkstücks W umfaßt, wie in Fig. 1 dargestellt, einen induktiven Lastzweig 10, in welchem eine Induktionsspule I angeordnet ist, mit welcher das Werkstück W induktiv erwärmt, insbesondere gehärtet, werden kann.

Die Induktionsspule I ist dabei über einen Transformator T2 mit Lastanschlüssen AL1 und AL2 verbunden, und zwar so, daß eine Primärwicklung $T3_1$ elektrisch direkt mit den Lastanschlüssen AL1 und AL2 verbunden ist, während eine Sekundärwicklung $T3_2$ des Transformators T3 elektrisch direkt mit der Induktionsspule I verbunden ist.

Insgesamt wird somit der induktive Lastzweig 10 durch den Transformator T3 und die Induktionsspule I gebildet, die in erster Linie Induktivitäten darstellen, wobei $L[T3_1]$ = (Übersetzungsverhältnis des Transformators)$^2$ • L[I]

Parallel zum induktiven Lastzweig 10 liegt zwischen den Lastanschlüssen AL1 und AL2 ein Kopplungszweig 12, der zusammen mit dem Lastzweig 10 einen ersten Schwingkreis 20 bildet.

Der Kopplungszweig 12 des ersten Schwingkreises 20 umfaßt dabei eine zwischen Anschlüssen AC1 und AC2 liegende Kapazität C1, welche zwischen den Anschlüssen AL1 und AL2 parallel zum Lastzweig 10 geschaltet ist, wobei vorzugsweise zwischen einem der Anschlüsse AC1 oder AC2 und dem entsprechenden Lastanschluß AL1 oder AL2 eine nachfolgend im einzelnen zu erläuternde Drosselinduktivität L2 vorgesehen ist.

Ferner ist noch der Anschluß AC1 oder AC2 des Kopplungszweigs 12 über eine Kopplungsinduktivität L1 mit einem Transformator T1 verbunden, und zwar mit einer Sekundärwicklung $T1_2$ desselben, während eine Primärwicklung $T1_1$ des Transformators T1 mit Ausgängen $A1_1$ und $A2_1$ eines ersten Wechselrichters 22 verbunden ist, der mit Gleichspannung aus einem ersten Gleichrichter 24 über einen Spannungszwischenkreis 26 versorgt ist, wobei in dem Spannungszwischenkreis 26 zwischen dem ersten Gleichrichter 24 und dem ersten Wechselrichter 22 noch ein Kondensator $CG_1$ vorgesehen ist, welcher dazu dient, Rückwirkung von Wechselspannungen bei der Frequenz des ersten Wechselrichters 22 auf das Versorgungsnetz für den ersten Gleichrichter 24 zu unterdrücken.

Der Wechselrichter 22 ist dabei ein nachfolgend noch im einzelnen zu erläuternder sogenannter Wechselrichter mit Spannungszwischenkreis, welcher so arbeitet, daß er den ersten Schwingkreis 20 in Resonanz betreibt.

Der erste Schwingkreis 20 des dargestellten ersten Ausführungsbeispiels kann als L-LC-Schwingkreis bezeichnet werden.

Die Resonanzfrequenz dieses L-LC-Schwingkreises 20 ist dabei bestimmt durch die Induktivitätswerte L[L1], L[L2] der Induktivitäten L1, L2 und den Induktivitätswert $L[T3_1]$ der Priämärwicklung $T3_1$ sowie die Kapazität C1. Dieser L-LC-Schwingkreis 20 hat eine Resonanzfrequenz $f_0$, die wie folgt festgelegt ist

$$f_0 = \frac{1}{2\Pi\sqrt{\dfrac{C1}{\dfrac{1}{L[L1]} + \dfrac{1}{L[L2]+L[T3_1]}}}}$$

Bei dem ersten Schwingkreis 20 fließt dabei ein Strom von dem Lastzweig 10 zum Kondensator C1 des Kopplungszweigs 12 und umgekehrt, so daß in vereinfachter Weise ein Teil des ersten Schwingkreises 20 so betrachtet werden kann, als ob dieser ein Parallelschwingkreis 14 wäre, mit der Kapazität C1 und der in Serie zur Primärwicklung $T3_1$ geschalteten Drosselinduktivität L2.

Ein derartiger Parallelschwingkreis 14 hätte dabei allerdings eine Resonanzfrequenz $f_{RP}$

$$f_{RP} = \frac{1}{2\Pi\sqrt{\dfrac{C1}{L[L2] + L[T3_1]}}}$$

wobei die die Resonanzfrequenz $f_{RP}$ bestimmende Induktivität dieses Parallelschwingkreises 14 aus der Summe der Induktivitätswerte L[L2] und $L[T3_1]$ zu bilden ist.

Diese Resonanzfrequenz $f_{RP}$ liegt dabei niedriger als die Resonanzfrequenz $f_0$ des ersten Schwingkreises 20.

Dadurch, daß jedoch der erste Schwingkreis 20 bei der Resonanzfrequenz $f_0$ betrieben wird, schwingt dieser einen Teil des ersten Schwingkreises 20 darstellende Parallelschwingkreis 14 nicht bei seiner Resonanzfrequenz $f_{RP}$, so daß tatsächlich in der Induktionsspule I eine induktive Erwärmung des Werkstücks W durch einen Wechselstrom bei der Resonanzfrequenz $f_0$ erfolgt.

Der erste Wechselrichter 22 arbeitet dabei vorzugsweise in einem Bereich von 1 kHz bis 500 kHz, insbesondere bei einer sogenannten Mittelfrequenz.

Um gleichzeitig neben der induktiven Erwärmung des Werkstücks W mit Wechselstrom der Frequenz $f_0$ noch das Werkstück W induktiv mit Wechselstrom höherer Frequenz erwärmen zu können, ist ein zweiter Schwingkreis 30, vorzugsweise ein Serienschwingkreis, vorgesehen, der gebildet ist durch einen Kondensator C2 und den induktiven Lastzweig 10, wobei der Kondensator C2 seriell zur Primärwicklung $T3_1$ des Transformators T3 geschaltet ist und beispielsweise in der Verbindung zwischen dem ersten Lastanschluß AL1 und einer Sekundärwicklung $T2_2$ eines Transformators T2 liegt, während die Sekundärwicklung $T2_2$ außerdem noch direkt mit dem zweiten Lastanschluß AL2 verbunden ist.

Der Transformator T2 ist mit seiner Primärwicklung $T2_1$ mit einer Ausgangsseite eines zweiten Wechselrichters 32 verbunden, der über einen zweiten Gleichrichter 34 mit Gleichspannung versorgt ist.

Dieser zweite Wechselrichter 32 arbeitet ebenfalls als spannungsgesteuerter Wechselrichter und erzeugt einen Wechselstrom bei einer Resonanzfrequenz $f_{RS}$ des Serienschwingkreises 30, die sich wie folgt ergibt

$$ f_{RS} = \frac{1}{2\,\Pi\,\sqrt{\dfrac{C2}{\dfrac{1}{L[T3_1]} + \dfrac{1}{L[L2]}}}} $$

In diesem Serienschwingkreis 30 stellt der induktive Lastzweig 10, insbesondere über die Primärwicklung $T3_1$ des Transformators T3, die mit dem Kondensator C2 in Serie geschaltete Induktivität dar, wobei der Primärwicklung $T3_1$ die Induktivität L2 parallelgeschaltet ist.

Die zweite Resonanzfrequenz $f_{RS}$ liegt dabei höher als die erste Resonanzfrequenz $f_0$ und vorzugsweise bei Frequenzen im Bereich von 5 kHz bis 3 MHz. Obwohl somit sowohl der erste, den Parallelschwingkreis 14 umfassende Schwingkreis 20 als auch der zweite, als Serienschwingkreis ausgeführte Schwingkreis 30 jeweils denselben induktiven Lastzweig 10 als Induktivität mitumfassen, führen weder die erste Resonanzfrequenz $f_0$ noch die zweite Resonanzfrequenz $f_{RS}$ zu Störungen der jeweils nicht mit dieser Frequenz arbeitenden zweiten und ersten Wechselrichter 32 und 22, und zwar aus folgenden Gründen:

Betrachtet man die Verhältnisse im ersten Schwingkreis 20 für über die Lastanschlüsse AL1 und AL2 in diesen eingekoppelte Wechselspannung der zweiten Frequenz $f_{RS}$, so umfaßt der Lastzweig 12 zunächst einen Dämpfungszweig 16, der im dargestellten Ausführungsbeispiel durch die Drosselinduktivität L2 gebildet ist, und nachfolgend auf diesen Dämpfungszweig 16 einen Quasikurzschlußzweig 18, der in dem dargestellten Ausführungsbeispiel durch den Kondensator C1 gebildet ist.

Die Drosselinduktivität L2 ist dabei so dimensioniert, daß sie die Einkopplung eines Wechselstroms der zweiten Frequenz $f_{RS}$ in den ersten Wechselrichter 22 reduziert, da durch die Drosselinduktivität L2 ein Wechselstrom der Frequenz $f_{RS}$ im Kopplungszweig 12 gedämpft wird.

Besonders wirksam ist die Drosselinduktivität L2, wenn deren Induktivitätswert L[L2] mindestens dreimal größer ist als der Induktivitätswert $L[T3_1]$ der Primärwicklung $T3_1$ des Transformators T3, so daß sich dadurch am Anschluß $AC_1$ des Kondensators C1 nur noch ein geringer Wechselstrom mit der zweiten Resonanzfrequenz $f_{RS}$ einstellt.

Ferner führt der Quasikurzschlußzweig 18 im Kopplungszweig 12, der im dargestellten Ausführungsbeispiel durch die Kapazität C1 gebildet ist, zu einem Kurzschluß für einen Wechselstrom der zweiten Frequenz $f_{RS}$ so daß hierdurch eine weitere Unterdrückung der Ausbildung eines Wechselstroms der zweiten Frequenz $f_{RS}$ im Kopplungszweig 12 erfolgt.

Somit erfolgt insgesamt bereits durch den Dämpfungszweig 16 und den Quasikurzschlußzweig 18 im Kopplungszweig 12 eine weitgehende Unterdrückung der Ausbildung eines Wechselstroms der zweiten Frequenz $f_{RS}$, so daß eine Rückwirkung desselben auf den ersten Wechselrichter 22 weitgehend verhindert werden kann.

Eine zusätzliche Unterdrückung der Rückwirkung einer Wechselspannung mit der zweiten Frequenz $f_{RS}$ auf den ersten Wechselrichter 22 erfolgt noch durch die Kopplungsinduktivität L1, die zwischen der Sekundärwicklung $T1_2$ des Transformators T1 und dem Anschluß AC1 vorgesehen ist. Dabei ist vorzugsweise der Induktivitätswert L[L1] der Kopplungsinduktivität L1 ungefähr dreimal so groß als die Summe der Induktivitätswerte L[L2] und $L[T3_1]$ der Induktivität L2 und der Primärwicklung $T3_1$.

Insgesamt arbeitet somit der erste Wechselrichter 22 im wesentlichen unbeeinflußt von Wechselspannung der zweiten Resonanzfrequenz $f_{RS}$.

Darüber hinaus erfolgen auch keine Rückwirkungen von Wechselspannungen der ersten Resonanzfrequenz $f_0$ auf den zweiten Wechselrichter 32, welcher mit der zweiten Resonanzfrequenz $f_{RS}$ betrieben wird, und zwar aufgrund des seriell zwischen dem ersten Lastanschluß AL1 und der Sekundärwicklung $T2_2$ des Transformators T2 liegenden Kondensators C2, der aufgrund seiner geringen Kapazität für Wechselstrom der ersten Resonanzfrequenz $f_{RP}$ sperrend wirkt und somit zu einer ausreichend großen Unterdrückung der Rückwirkung desselben auf den zweiten Wechselrichter 32 führt.

Ferner umfaßt die erfindungsgemäße Einrichtung zum induktiven Erwärmen von Werkstücken W noch eine Gesamtsteuerung 40, mit welcher die Möglichkeit besteht, den ersten Wechselrichter 22 und den zweiten Wechselrichter 32 hinsichtlich ihrer Leistung relativ zueinander in einem weiten Bereich, vorzugsweise in einem Verhältnis von 1:99 bis zu einem Verhältnis von 99: 1 zu steuern, um je nach Anwendungsfall die Induktionsspule I mit Wechselstrom der ersten Resonanzfrequenz $f_0$ und Wechselstrom der zweiten Resonanzfrequenz $f_{RS}$ mit jeweils unterschiedlich großer Leistung betreiben und mit den entsprechenden Feldern auf das Werkstück W einwirken zu können.

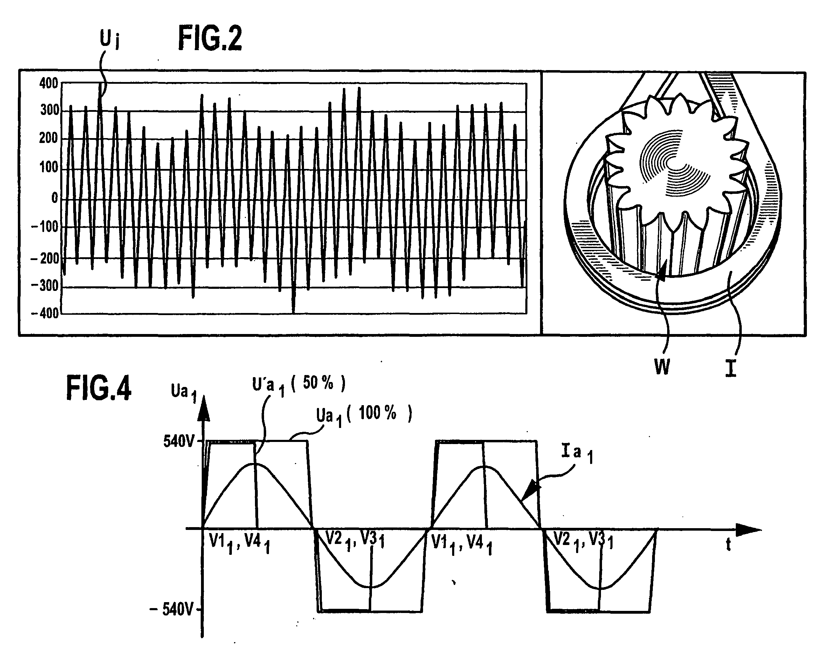

Damit besteht die Möglichkeit, wie in Fig. 2 anhand eines als Werkstück ausgebildeten Zahnrades demonstriert, mit den Feldern eines zwei Frequenzanteile, nämlich $f_0$ und $f_{RS}$ aufweisenden Wechselstromes das Werkstück W oberflächlich induktiv zu erwärmen und eine gleichmäßige Oberflächenerwärmung und somit eine gleichmäßige Oberflächenhärtung zu erreichen, die sich darin äußert, daß sowohl im Bereich des Zahnkopfes als auch im Bereich des Zahnfußes die Erwärmung ungefähr gleich groß ist und somit auch eine ungefähr gleich große Einhärtetiefe erreichbar ist.

Dies ist werkstückabhängig und erfordert beispielsweise bei einer bestimmten Form des Werkstücks W eine Leistungseinstellung dergestalt, daß die Leistung des Wechselstroms mit der ersten Resonanzfrequenz $f_0$ größer ist als die Leistung des Wechselstroms mit der zweiten Resonanzfrequenz $f_{RS}$.

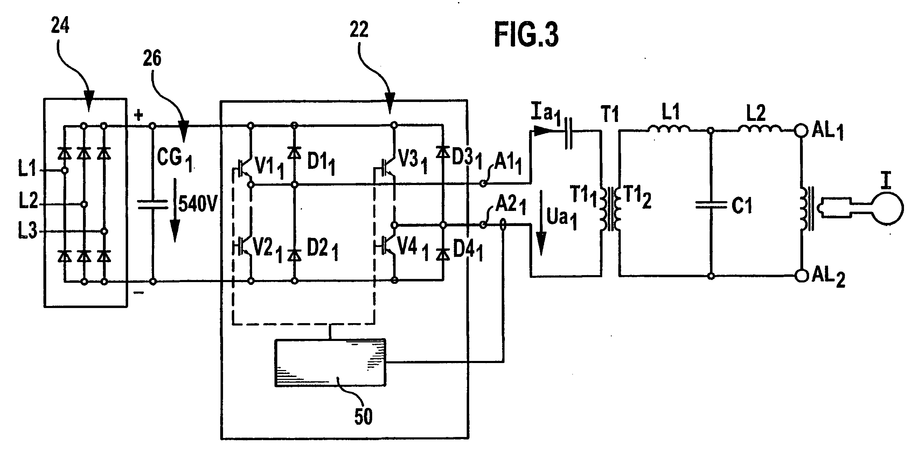

Die Arbeitsweise des ersten Wechselrichters 22 in Verbindung mit dem ersten Gleichrichter 24 und dem L-LC-Schwingkreis 20 ist nochmals im einzelnen in Fig. 3 dargestellt.

Der erste Gleichrichter 24 ist vorzugsweise als Sechspulsbrückengleichrichter für ein Drehstomnetz, bei höheren Leistungen jedoch höherpulsig, ausgeführt und erzeugt beispielsweise eine Gleichspannung von 540 V in dem Spannungszwischenkreis 26.

Mit dieser Gleichspannung wird der erste Wechselrichter 22 gespeist, welcher als Vollbrückenschaltung ausgeführt ist und Schalttransistoren $V1_1$, $V2_1$, $V3_1$ und $V4_1$ aufweist, denen Freilaufdioden $D1_1$, $D2_1$, $D3_1$ und $D4_1$ antiparallel zugeordnet sind. Die einzelnen Schalttransistoren $V1_1$ bis $V4_1$ können aber auch aus mehreren parallelgeschalteten Einzeltransistoren mit entsprechenden Freilaufdioden bestehen.

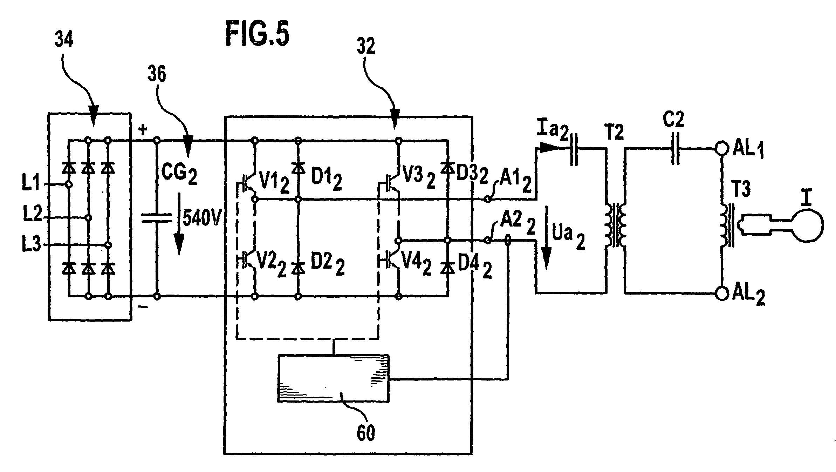

Die Schalttransistoren $V1_1$ bis $V4_1$ werden dabei von einer ersten Wechselrichtersteuerung 50 angesteuert, welche die Schalttransistoren $V1_1$ bis $V4_1$ so betreibt, daß Ausgänge $A1_1$ und $A2_1$ des ersten Wechselrichters 22 wechselweise mit dem Plus-Eingang und dem Minus-Eingang des ersten Wechselrichters 22 verbunden werden, um die in Fig. 4 dargestellte, ungefähr rechteckförmige Wechselspannung $Ua_1$ und den sich ergebenden entsprechenden Wechselstrom $Ia_1$ zu erzeugen.

Die Periodizität der Wechselspannung $Ua_1$ entspricht dabei der Resonanzfrequenz $f_0$ des L-LC-Schwingkreises 20, wobei die erste Wechselrichtersteuerung 50 hierzu zur Ansteuerung der Schalttransistoren $V1_1$ bis $V4_1$ den Strom $Ia_1$ am Ausgang des ersten Wechselrichters 22 erfaßt und über eine PLL-Schaltung die zeitliche Folge der Ansteuerung für die Schalttransistoren $V1_1$ bis $V4_1$ in Anpassung an den zeitlichen Verlauf des Stroms $Ia_1$ ermittelt.

Die Leistungsregelung des von dem ersten Wechselrichter 22 erzeugten Wechselstroms erfolgt über eine Pulsweitenmodulation, der Spannung $Ua_1$, wobei, wie in Fig. 3 dargestellt, die Schalttransistoren $V1_1$ bis $V4_1$ von der ersten Wechselrichtersteuerung 50 jeweils im Nulldurchgang des Stroms $Ia_1$ eingeschaltet werden und je nach gewünschter Leistung entweder bei einer Pulsweitenmodulation von 100 % unmittelbar vor dem nächsten Nulldurchgang des Stroms $Ia_1$ ausgeschaltet werden oder bei einem pulsweitenmodulierten Signal von weniger als 100 % entsprechend vorher vor dem nächstfolgenden Nulldurchgang des Stroms $Ia_1$ ausgeschaltet werden, wie dies beispielsweise bei einer Pulsweitenmodulation von 50 % in Fig. 4 durch den Spannungsverlauf $Ua_1$' dargestellt ist.

Da der erste Wechselrichter 22 stets bei der Resonanzfrequenz $f_0$ des ersten Schwingkreises 20 arbeitet, besteht die Möglichkeit, die Schalttransistoren $V1_1$ bis $V4_1$ zumindest verlustarm einzuschalten während ein Ausschalten in Abhängigkeit von der eingestellten Pulsweite verlustbehaftet erfolgt. Dennoch sind dabei die in Kauf zu nehmenden Verluste im Rahmen der Möglichkeiten minimiert.

Der zweite Gleichrichter 34 und der zweite Wechselrichter 32 sind vom Prinzip her in gleicher Weise aufgebaut und arbeiten mit einem Spannungszwischenkreis 36, wie der erste Wechselrichter 22, wobei die Schalttransistoren $V1_2$ bis $V4_2$ durch eine zweite Wechselrichtersteuerung 60 ansteuerbar sind, die im Gegensatz zur ersten Wechselrichtersteuerung 50 nach dem Steuerprinzip der "Pulspaketsteuerung" arbeitet.

Zur Synchronisation mit der Frequenz $f_{RS}$ des Serienschwingkreises 30 erfaßt die zweite Wechselrichtersteuerung 60 den Strom $Ia_2$ an den Ausgängen $A1_2$ oder $A2_2$ und synchronisiert die zeitliche Folge der Ansteuerung der Schalttransistoren $V1_2$ bis $V4_2$ mittels einer bekannten PLL-Schaltung, so daß die Schalttransistoren $V1_2$ bis $V4_2$ zeitsynchron zur zweiten Resonanzfrequenz $f_{RS}$ schalten.

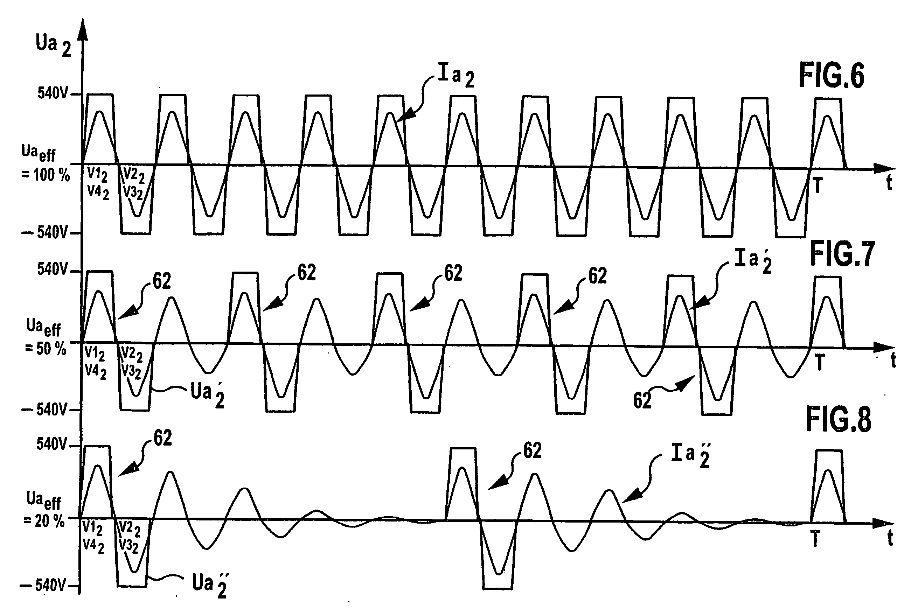

Wie in Fig. 6 dargestellt, führt dies bei voller Leistung des zweiten Wechselrichters 32 dazu, daß die Spannung $Ua_2$ an den Ausgängen $A1_2$ und $A2_2$ rechteckförmig durch Schalten der Schalttransistoren $V1_2$ bis $V4_2$ umgeschaltet wird und sich entsprechend ein ungefähr sinusförmiger Verlauf des Stroms $Ia_2$ ergibt.

Dabei erfolgt stets ein Einschalten der Schalttransistoren $V1_2$ bis $V2_4$ im wesentlichen im Nulldurchgang des Stroms $Ia_2$.

Soll die Leistung reduziert werden, so erfolgt, wie in Fig. 7 dargestellt, nicht wie bei der Pulsweitenmodulation ein Abschalten der Spannung $U_{a2}$ vor dem nächsten Nulldurchgang, sondern es werden sogenannte Pulspakete 62 gebildet, die zumindest im wesentlichen eine halbe Periode des zeitlichen Verlaufs des Stroms $Ia_2$ umfassen und nach diesen Pulspaketen 62 erfolgt eine Unterbrechung bis zum nächsten Pulspaket 62, so daß jeweils die Spannung $Ua_2$ nahe dem, im wesentlichen bei dem Nulldurchgang des Stroms $Ia_2$ eingeschaltet und ausgeschaltet wird.

Wird beispielsweise eine Pulspaketsteuerung durchgeführt, bei welcher die Leistung des zweiten Wechselrichters 32 einem Effektivwert der Spannung von 50 % entsprechen soll, so wird die Spannung $Ua_2$ während einer positiven und einer darauffolgenden negativen Halbwelle des Stroms $Ia_2$' eingeschaltet, dann während der nächsten positiven und negativen Halbwelle ausgeschaltet, dann wieder während einer positiven und einer nachfolgenden negativen Halbwelle ausgeschaltet und so weiter, wobei die Amplitude des Stroms $Ia_2$' nach einem derartigen Pulspaket 62 abklingt und dann wieder im nächsten Pulspaket 62 größer wird.

Noch extremer werden die Verhältnisse, wenn, wie in Fig. 8 dargestellt, eine Pulspaketsteuerung mit einer Leistung des zweiten Wechselrichters 32 erfolgt, die einem Effektivwert der Spannung von 20 % entspricht. Hierzu wird beispielsweise während einer positiven und einer nachfolgenden negativen Halbwelle des Stroms $Ia_2$" die Spannung $Ua_2$" durch die Schalttransistoren $V1_2$ bis $V4_2$ eingeschaltet und dann beispielsweise während der nächstfolgenden acht Halbwellen ausgeschaltet, so daß nach diesem Pulspaket 62 der Strom $Ia_2$" hinsichtlich seiner Amplitude abnimmt und erst beim nächstfolgenden Pulspaket 62 wieder die maximale Amplitude erreicht und nach diesem wiederum abklingt.

Dadurch besteht die Möglichkeit, einerseits vorteilhafterweise jeweils im Nulldurchgang des Stroms $Ia$ die Schalttransistoren $V1_2$ bis $V4_2$ ein- oder auszuschalten.

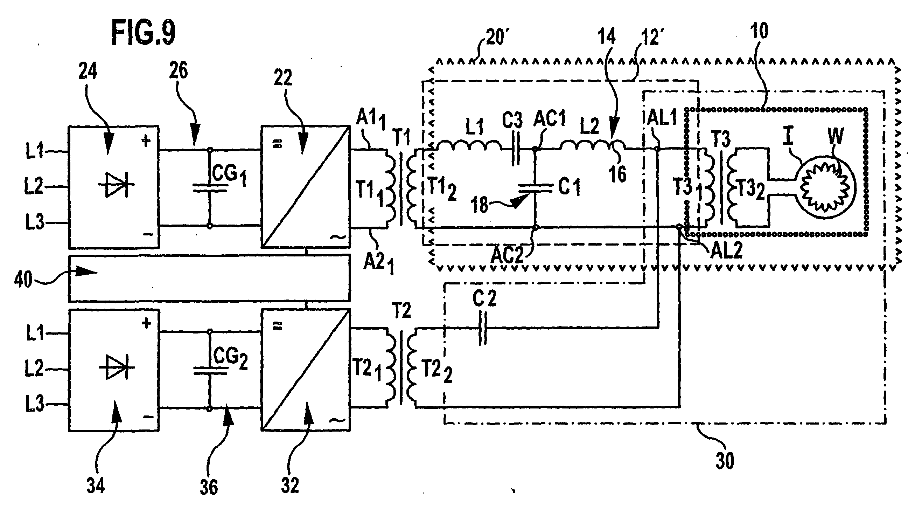

Bei einem zweiten Ausführungsbeispiel einer erfindungsgemäßen Einrichtung, dargestellt in Fig. 9, ist der erste Schwingkreis 20' so ausgebildet, daß der Kopplungszweig 12' zusätzlich zur Kopplungsinduktivität L1 noch eine Kopplungskapazität C3 aufweist, die in Serie mit der Kopplungsinduktivität L1 geschaltet ist und nicht nur dazu dient, den ersten Wechselrichter 22 und den zweiten Wechselrichter 32 gleichstrommäßig zu entkoppeln, sondern gleichzeitig auch die Resonanzfrequenz $f_0$ des ersten Schwingkreises 20 beeinflußt.

Im übrigen ist das zweite Ausführungsbeispiel in gleicher Weise ausgebildet wie das erste Ausführungsbeispiel, so daß vollinhaltlich auf die Ausführungen zum ersten Ausführungsbeispiel Bezug genommen werden kann.

**Patentansprüche**

1. Einrichtung zum induktiven Erwärmen von Werkstücken (W) mittels einer Induktionsspule (I), insbesondere zum Härten der Werkstücke (W), umfassend,
   einen durch einen ersten Gleichrichter (24) gespeisten ersten Wechselrichter (22) und einen von diesem Wechselrichter (22) betriebenen ersten Schwingkreis (20), der für eine erste Frequenz ($f_0$) als Resonanzfrequenz ausgebildet ist,
   einen durch einen zweiten Gleichrichter (34) über einen Spannungszwischenkreis (36) gespeisten zweiten Wechselrichter (32) und einen von diesem Wechselrichter (32) betriebenen zweiten Schwingkreis (30), der für eine zweite Frequenz ($f_{RS}$) als Resonanzfrequenz ausgebildet ist, wobei die zweite Frequenz ($f_{RS}$) höher liegt als die erste Frequenz ($f_0$), mindestens einen zwischen einem der Wechselrichter (22, 32) und dem diesem zugeordneten Schwingkreis (20, 30) vorgesehenen Transformator (T1, T2)
   und einen die Induktionsspule (I) umfassenden induktiven Lastzweig (10) mit Lastanschlüssen (AL1, AL2), welcher über die Lastanschlüsse (AL1, AL2) sowohl in den ersten Schwingkreis (20) als auch in den zweiten Schwingkreis (30) eingebunden und sowohl im ersten Schwingkreis (20) als auch im zweiten Schwingkreis (20) als Induktivität miteinbezogen ist,
   **dadurch gekennzeichnet, daß** der erste Wechselrichter (22) über einen Spannungszwischenkreis (26) gespeist ist, daß der erste Schwingkreis (20) als L-LC-Schwingkreis ausgebildet ist, daß der L-LC-Schwingkreis (20) für über die Lastanschlüsse (AL1, AL2) eingekoppelte Wechselspannung der zweiten Frequenz ($f_{RS}$) einen Dämpfungszweig (16) und einen auf diesen Dämpfungszweig (16) folgenden Quasikurzschlußzweig (18) aufweist, daß der L-LC- Schwingkreis (20) zur Kopplung des Quasikurzschlußzweigs (18) mit dem ersten Wechselrichter (22) eine Kopplungsinduktivität (L1) aufweist und daß der Dämpfungszweig (16) der Quasikurzschlußzweig (18) und Kopplungsinduktivität (L1)Rückwirkungen von Wechselspannungen der zweiten Frequenz ($F_{RS}$) auf den ersten Wechselrichter (22) dämpfen.

2. Einrichtung nach Anspruch 1, **dadurch gekennzeichnet, daß** der Dämpfungszweig (16) eine Drosselinduktivität (L2) umfaßt.

3. Einrichtung nach einem der Ansprüche 1 oder 2, **dadurch gekennzeichnet, daß** der Quasikurzschlußzweig (18) eine Kapazität (C1) umfaßt.

4. Einrichtung nach einem der voranstehenden Ansprüche, **dadurch gekennzeichnet, daß** der erste Schwingkreis (20') eine Kopplungskapazität (C3) aufweist.

5. Einrichtung nach Anspruch 4, **dadurch gekennzeichnet, daß** die Kopplungskapazität (C3) und die Kopplungsinduktivität (L1) in Serie geschaltet sind.

6. Einrichtung nach Anspruch 4 oder 5, **dadurch gekennzeichnet, daß** die Kopplungsinduktivität (L1) und die Kopplungskapazität (C3) in dem Kopplungszweig (12) zwischen dem Quasikurzschlußzweig (18) und dem ersten Wechselrichter (22) liegen.

7. Einrichtung nach einem der voranstehenden Ansprüche, **dadurch gekennzeichnet, daß** der zweite Schwingkreis (30) ein Serienschwingkreis ist.

8. Einrichtung nach einem der voranstehenden Ansprüche, **dadurch gekennzeichnet, daß** dem ersten Wechselrichter (22) eine erste Wechselrichtersteuerung (50) als Leistungssteuerung zugeordnet ist.

9. Einrichtung nach Anspruch 8, **dadurch gekennzeichnet, daß** die erste Wechselrichtersteuerung (50) die Leistung des ersten Wechselrichters (22) durch Pulsweitenmodulation steuert.

10. Einrichtung nach einem der voranstehenden Ansprüche, **dadurch gekennzeichnet, daß** dem zweiten Wechselrichter (32) eine zweite Wechselrichtersteuerung (60) als Leistungssteuerung zugeordnet ist.

11. Einrichtung nach Anspruch 10, **dadurch gekennzeichnet, daß** die zweite Wechselrichtersteuerung (60) die Leistung des zweiten Wechselrichters (32) durch Pulspaketsteuerung steuert.

12. Einrichtung nach einem der Ansprüche 8 bis 11, **dadurch gekennzeichnet, daß** die Einrichtung eine Gesamtsteuerung (40) aufweist, welche mit der ersten und zweiten Wechselrichtersteuerung (50, 60) gekoppelt ist und mit welcher die Leistung des ersten Wechselrichters (22) und die Leistung des zweiten Wechselrichters (32) unterschiedlich einstellbar sind.

13. Einrichtung nach Anspruch 12, **dadurch gekennzeichnet, daß** mit der Gesamtsteuerung (40) die Leistung des ersten Wechselrichters (22) und die Leistung des zweiten Wechselrichters (32) jeweils im wesentlichen stufenlos einstellbar sind.

14. Einrichtung nach Anspruch 12 oder 13, **dadurch gekennzeichnet, daß** die Leistung des ersten Wechselrichters (22) relativ zur Leistung des zweiten Wechselrichters (32) mindestens in einem Bereich, der von einem Verhältnis von 40:60 bis zu einem Verhältnis von 60:40 reicht, einstellbar sind.

15. Einrichtung nach einem der voranstehenden Ansprüche, **dadurch gekennzeichnet, daß** sich die erste Frequenz ($f_0$) und die zweite Frequenz ($f_{RS}$) um mindestens eine halbe Dekade unterscheiden.

16. Einrichtung nach einem der voranstehenden Ansprüche, **dadurch gekennzeichnet, daß** die erste Frequenz ($f_0$) im Bereich von 1 kHz bis 500 kHz liegt.

17. Einrichtung nach einem der voranstehenden Ansprüche, **dadurch gekennzeichnet, daß** die zweite Frequenz ($f_{Rs}$) in einem Bereich von 5 kHz bis 3 MHz liegt.

18. Einrichtung nach einem der voranstehenden Ansprüche, **dadurch gekennzeichnet, daß** die Kopplungsinduktivität (L1) des ersten Schwingkreises (20) einen Induktivitätswert aufweist, die mindestens das Dreifache der Summe der Induktivitätswerte der übrigen Induktivitäten (L", $T3_1$) im ersten Schwingkreis beträgt.

19. Einrichtung nach einem der voranstehenden Ansprüche, **dadurch gekennzeichnet, daß** die im Kopplungszweig zwischen dem Lastanschluß (AL1) und dem Quasikurzschlußzweig (C1) liegende Drosselinduktivität (L2) einen Induktivitätswert aufweist, der mindestens dreimal größer als der im ersten Schwingkreis (20) wirksame Induktivitätswert L[$T3_1$] des Lastkreises (10) ist.

20. Einrichtung nach einem der voranstehenden Ansprüche, **dadurch gekennzeichnet, daß** im Lastkreis (10) zwischen den Lastanschlüssen (AL1, AL2) und der Induktionsspule (I) ein Transformator (T3) vorgesehen ist.

## Claims

1. A device for inductively heating work pieces (W) by means of an induction coil (I), in particular for hardening the work pieces (W), comprising, a first inverter (22) which is fed by a first rectifier (24) and a first resonant circuit (20) which is driven by this inverter (22) and has a first frequency ($f_0$) as its resonant frequency, a second inverter (32) which is fed by a second rectifier (34) via a voltage buffer circuit (36), and a second resonant circuit (30) which is driven by this inverter (32) and has a second frequency ($f_{RS}$) as its resonant frequency, wherein the second frequency ($f_{RS}$) is higher than the first frequency ($f_0$), at least one transformer (T1, T2) which is provided between one of the inverters (22, 32) and the resonant circuit (20, 30) associated therewith,

and an inductive load branch (10) which comprises the induction coil (I) and has load terminals (AL1, AL2), said inductive branch being incorporated via the load terminals (AL1, AL2) in both the first resonant circuit (20) and the second resonant circuit (30) and being included as an inductance in both the first resonant circuit (20) and the second resonant circuit (30),

**characterised in that** the first inverter (22) is fed via a voltage buffer circuit (26), **in that** the first resonant circuit (20) is in the form of an L-LC resonant circuit, **in that** the L-LC resonant circuit (20) comprises a damping branch (16) and a quasi short-circuiting branch (18) following this damping branch (16) for an alternating voltage of the second frequency ($f_{RS}$) which is coupled in via the load terminals (AL1, AL2), **in that** the L-LC resonant circuit (20) comprises a coupling inductance, (L1) for the purposes of coupling the quasi short-circuiting branch (18) to the first inverter (22), and **in that** the damping branch (16), the quasi short-circuiting branch (18) and the coupling inductance (L1) dampen the feedback of alternating voltages of the second frequency ($f_{RS}$) to the first inverter (22).

2. A device in accordance with Claim 1, **characterised in that** the damping branch (16) comprises a choke inductance (L2).

3. A device in accordance with either of the Claims 1 or 2, **characterised in that** the quasi short-circuiting branch (18) comprises a capacitor (C1).

4. A device in accordance with any of the preceding Claims, **characterised in that** the first resonant circuit (20') comprises a coupling capacitor (C3).

5. A device in accordance with Claim 4, **characterised in that** the coupling capacitor (C3) and the coupling inductance (L1) are connected in series.

6. A device in accordance with Claim 4 or 5, **characterised in that** the coupling inductance (L1) and the coupling capacitor (C3) are located in the coupling branch (12') between the quasi short-circuiting branch (18) and the first inverter (22).

7. A device in accordance with any of the preceding Claims, **characterised in that** the second resonant circuit (30) is a series resonant circuit.

8. A device in accordance with any of the preceding Claims, **characterised in that** a power controlling system in the form of a first inverter control means (50) is associated with the first inverter (22).

9. A device in accordance with Claim 8, **characterised in that** the first inverter control means (50) controls the power output of the first inverter (22) by a pulse width modulation process.

10. A device in accordance with any of the preceding Claims, **characterised in that** a power controlling system in the form of a second inverter control means (60) is associated with the second inverter (32).

11. A device in accordance with Claim 10, **characterised in that** the second inverter control means (60) controls the power output of the second inverter (32) by a pulse packet control process.

12. A device in accordance with any of the Claims 8 to 11, **characterised in that** the device comprises an overall control system (40) which is coupled to the first and second inverter control means (50, 60) and, with the aid of which, the power output of the first inverter (22) and the power output of the second inverter (32) are separately adjustable.

13. A device in accordance with Claim 12, **characterised in that** the power output of the first inverter (22) and the power output of the second inverter (32) are each adjustable in substantially step-less manner by the overall control system (40).

14. A device in accordance with Claim 12 or 13, **characterised in that** the power output of the first inverter (22) relative to the power output of the second inverter (32) are adjustable at least in a range which extends from a ratio of 40:60 to a ratio of 60:40.

15. A device in accordance with any of the preceding Claims, **characterised in that** the first frequency ($f_0$) and the second frequency ($f_{RS}$) differ by at least half a decade.

16. A device in accordance with any of the preceding Claims, **characterised in that** the first frequency ($f_0$) lies within the range of 1 kHz to 500 kHz.

17. A device in accordance with any of the preceding Claims, **characterised in that** the second frequency ($f_{RS}$) lies in a range of 5 kHz to 3 MHz.

18. A device in accordance with any of the preceding Claims, **characterised in that** the coupling inductance (L1) of the first resonant circuit (20) has an inductance value which amounts to at least three times the sum of the inductance values of the other inductances (L2, $T3_1$) in the first resonant circuit.

19. A device in accordance with any of the preceding Claims, **characterised in that** the choke inductance (L2) located in the coupling branch between the load terminal (AL1) and the quasi short-circuiting branch (C1) has an inductance value which is at least three times greater than the inductance value ($L[T3_1]$) of the load circuit (10) effective in the first resonant circuit (20).

20. A device in accordance with any of the preceding Claims, **characterised in that** a transformer (T3) is provided in the load circuit (10) between the load terminals (AL1, AL2) and the induction coil (I).

**Revendications**

1. Dispositif de chauffage inductif de pièces (W) au moyen d'une bobine d'inductance (I), en particulier pour tremper les pièces (W), comprenant :

un premier onduleur (22) alimenté par un premier redresseur (24) et un premier circuit résonant (20) qui est actionné par cet onduleur (22) et configuré pour une première fréquence ($f_0$) comme fréquence de résonance,
un deuxième onduleur (32) alimenté par un deuxième redresseur (34) par le biais d'un circuit de tension intermédiaire (36) et un deuxième circuit résonant (30) qui est actionné par cet onduleur (32) et configuré pour une deuxième fréquence ($f_{RS}$) comme fréquence de résonance, la deuxième fréquence ($f_{RS}$) étant supérieure à la première fréquence ($f_0$),
au moins un transformateur (11, 12) prévu entre l'un des onduleurs (22, 32) et le circuit résonant (20, 30) associé à celui-ci,
et une branche de charge (10) inductive qui comprend la bobine d'inductance (I), est munie de raccords de charge (AL1, AL2) et intégrée par les raccords de charge (AL1, AL2) aussi bien dans le premier circuit résonant (20) que dans le deuxième circuit résonant (30), et qui sert également d'inductance aussi bien dans le premier circuit résonant (20) que dans le deuxième circuit résonant (30),
**caractérisé en ce que** le premier onduleur (22) est alimenté par un circuit intermédiaire de tension (26), le premier circuit résonant (20) est configuré comme circuit résonant L-LC, le circuit résonant L-LC (20) présente une branche d'amortissement (16) pour la tension alternative de la deuxième fréquence ($f_{RS}$), injectée par les raccords de charge (AL1, AL2), et une branche de quasi court-circuit (18) suivant cette branche d'amortissement (16), le circuit résonant L-LC (20) présente une inductance de couplage (L1) pour coupler la branche de quasi court-circuit (18) au premier onduleur (22), et la branche d'amortissement (16), la branche de quasi court-circuit (18) et l'inductance de couplage (L1) amortissent des rétroactions de tensions alternatives de la deuxième fréquence ($f_{RS}$) sur le premier onduleur (22).

2. Dispositif selon la revendication 1, **caractérisé en ce que** la branche d'amortissement (16) comprend une inductance de réactance (L2).

3. Dispositif selon l'une quelconque des revendications 1 ou 2, **caractérisé en ce que** la branche de quasi court-circuit (18) comprend une capacité (C1).

4. Dispositif selon l'une quelconque des revendications précédentes, **caractérisé en ce que** le premier circuit résonant (20') présente une capacité de couplage (C3).

5. Dispositif selon la revendication 4, **caractérisé en ce que** la capacité de couplage (C3) et l'inductance de couplage (L1) sont montées en série.

6. Dispositif selon la revendication 4 ou 5, **caractérisé en ce que** l'inductance de couplage (L1) et la capacité de couplage (C3) se situent dans la branche de couplage (12') entre la branche de quasi court-circuit (18) et le premier onduleur (22).

7. Dispositif selon l'une quelconque des revendications précédentes, **caractérisé en ce que** le deuxième circuit résonant (30) est un circuit résonant en série.

8. Dispositif selon l'une quelconque des revendications précédentes, **caractérisé en ce qu'**une première commande d'onduleur (50) est associée au premier onduleur (22) pour commander la puissance.

9. Dispositif selon la revendication 8, **caractérisé en ce que** la première commande d'onduleur (50) commande la puissance du premier onduleur (22) par modulation d'impulsions en largeur.

10. Dispositif selon l'une quelconque des revendications précédentes, **caractérisé en ce qu'**une deuxième commande d'onduleur (60) est associée au deuxième onduleur (22) pour commander la puissance.

11. Dispositif selon la revendication 10, **caractérisé en ce que** la deuxième commande d'onduleur (60) commande la puissance du deuxième onduleur (32) par commande de paquets d'impulsions.

12. Dispositif selon l'une quelconque des revendications 8 à 11, **caractérisé en ce que** le dispositif présente une commande globale (40), qui est couplée aux première et deuxième commandes d'onduleur (50, 60) et permet de régler différemment la puissance du premier onduleur (22) et la puissance du deuxième onduleur (32).

**13.** Dispositif selon la revendication 12, **caractérisé en ce que** la commande globale (40) permet de régler la puissance du premier onduleur (22) et la puissance du deuxième onduleur (32) chacune pour l'essentiel de manière continue.

**14.** Dispositif selon la revendication 12 ou 13, **caractérisé en ce que** la puissance du premier onduleur (22) peut être réglée par rapport à la puissance du deuxième onduleur (32) du moins dans une plage qui s'étend d'un rapport de 40/60 à un rapport de 60/40.

**15.** Dispositif selon l'une quelconque des revendications précédentes, **caractérisé en ce que** la première fréquence ($f_0$) et la deuxième fréquence ($f_{RS}$) diffèrent d'au moins une demi-décade l'une de l'autre.

**16.** Dispositif selon l'une quelconque des revendications précédentes, **caractérisé en ce que** la première fréquence ($f_0$) se situe dans une plage entre 1 kHz et 500 kHz.

**17.** Dispositif selon l'une quelconque des revendications précédentes, **caractérisé en ce que** la deuxième fréquence ($f_{RS}$) se situe dans une plage entre 5 kHz et 3 MHz.

**18.** Dispositif selon l'une quelconque des revendications précédentes, **caractérisé en ce que** l'inductance de couplage (L1) du premier circuit résonant (20) présente une valeur d'inductance d'au moins trois fois la somme des valeurs d'inductance des autres inductances (L2, T3$_1$) dans le premier circuit résonant.

**19.** Dispositif selon l'une quelconque des revendications précédentes, **caractérisé en ce que** l'inductance d'étranglement (L2) située dans la branche de couplage entre le raccord de charge (AL1) et la branche de quasi court-circuit (C1) présente une valeur d'inductance au moins trois fois la valeur d'inductance (L[T3$_1$]) du circuit de charge (10) efficace dans le premier circuit résonant (20).

**20.** Dispositif selon l'une quelconque des revendications précédentes, **caractérisé en ce qu'**un transformateur (T3) est prévu dans le circuit de charge (10) entre les raccords de charge (AL1, AL2) et la bobine d'inductance(1).

**FIG.1**

EP 1 363 474 B1

# FIG.2

$U_i$

# FIG.4

$Ua_1$

$U'a_1 (50\%)$

$Ua_1 (100\%)$

540V

$Ia_1$

$V1_1, V4_1$   $V2_1, V3_1$   $V1_1, V4_1$   $V2_1, V3_1$   t

−540V

W   I

EP 1 363 474 B1

FIG.3

**FIG.5**

EP 1 363 474 B1

FIG.6

FIG.7

FIG.8

EP 1 363 474 B1

# FIG.9

EP 1 363 474 B1